# EUROPEAN PATENT APPLICATION

(11) **EP 0 845 495 A2**
(43) Date of publication of application: **03.06.1998**
(21) Application number: 97119912.0
(22) Date of filing: 13.11.1997
(51) Int. Cl.: C08L 1/00, C08B 15/00, D21H 17/25, C02F 1/56, C02F 11/12

(54) **Cellulose particles, method for producing them and their use**

(30) Priority: 29.11.1996 GB 9625060
(71) Applicant: Lumos Trading & Investments Corporation, Road Town, Tortola (VG)
(72) Inventor: Spedding, Jeffrey F., 5081 Anif (AT); Oberkofler, Jörg, 4863 Seewalchen (AT)
(74) Representative: Kador & Partner

(57) **Abstract**

Cellulose particles that possess cationic groups characterised in that the particles are essentially insoluble in water and that the cationic groups are present on the surface.

## Description

The invention refers to cellulose particles and methods for producing them. Further, there are applications for the said cellulose particles.

Through various measures taken in the paper industry such as circuit closure, greater use from de-inking pulp and high yield pulps such as ground wood and TMP (thermomechanical pulp) and neutral running conditions, the burden of interfering substances in the water circuits has increased.

In the first instance, interfering substances, sometimes called anionic trash, are defined as substances that are not wanted in the papermaking system because they interfere with most functional additives and many processing aids. These interfering substances especially reduce the efficiency of cationic retention additives, and also other additives used to improve the retention of fibre, fillers and fines on the wire in papermaking. This definition can be further more precisely defined in that interfering substances are dissolved or colloidal anionic oligomers or polymers and also non-ionic hydrocolloids.

The publically opened international patent application "Cellulose particles, methods for producing them and their use", application no. PCT/EP96/00650, refers to an insoluble cationic cellulose particle which is uniformly cationised through the whole cross-section. Although the cellulose particles of patent application PCT/EP96/00650 can have a similar total cationicity to the particles of the present invention, in application they can require a longer contact time with the paper stock due to the time taken for anionic substances to penetrate the porous substrate matrix whereas the particles of this invention have the available cationicity on the surface.

Many paper machine circuits have accepted-stock refiners which give a more uniform fibre condition before paper formation. In so a situation, the cationic particles of patent application PCT/EP96/00650 will be further refined which may or may not be advantageous as it increases the immediately available cationicity on the particle. In a paper stock which contains high yield fibres, which could release more anionic trash in such a refining process, the concurrent exposure of more cationic activity can be an advantage.

The cationic particle of the present invention, when refined further, show little significant increase in immediately available cationic charge. Thus the cationic particles from patent application PCT/EP96/00650 and those from the present invention, although both constituting cationic cellulose particles, have different structures and potentially different applicational characteristics.

Further, stricter demands placed on the quality of water returned to the environment or recycled for industrial use from waste water treatment has lead to a demand for more efficient systems for separation of solids and dissolved or colloidal contaminants from such waste water streams. Typically, water soluble cationic coagulants and polymeric flocculants are used to achieve the required separation. Many of the contaminating substances are anionic in character.

The main problems arising in such treatment of waste water are two fold.

First the reduction of chemical oxygen demand (COD) in the treated water to be re-cycled to improve its quality and secondly the reduction in water content of sludge that is separated from the water and must be disposed of, usually a process involving significant cost or difficulties arising from a high moisture content.

A problem that arises both in trash fixation in papermaking and also, in coagulation of anionic substances in waste water treatment, is that the water soluble highly cationic polymers which are today commonly used for these purposes, if overdosed, can lead to the opposite of the desired effect, namely cationic dispersion.

Further, mineral substances used for trash fixation can lead to unwanted deposits in paper machine circuits.

The task of this invention is to produce a cellulose particle that distinguishes itself through special characteristics and applicational possibilities. Further, the task of this invention is to produce a cellulose particle that can bind interfering substances, especially of anionic charge, from paper machine or water circuits into the paper and be subsequently carried out of the circuits without any of the previously defined problems arising.

A further task of this invention is to produce a cellulose particle that through its ability to react with or bind with contaminating substances in waste water can improve the performance of water purification systems beyond the efficiency of that obtained with currently used technology.

Further, the task of this invention is to specify other applications of the cellulose particle.

The invention lays basically in the discovery that these tasks can be solved by the use of cellulose particles that are dispersable but essentially insoluble in water and that have cationic groups on the surface.

So that the particle functions according to this invention, it should have enough surface cationic groups present to exhibit an excess cationic charge.

The cationic cellulose particle of the present invention is described as essentially insoluble. The meaning and the requirement here is that when dispersed in water, a significant proportion of the mass of the particle should remain insoluble for a given duration and that at the same time, a significant proportion of the cationicity should remain bonded to the undissolved substrate.

This is more clearly defined in that the cationic cellulose particle, dispersed as a 3% (dry weight) slurry in water at room temperature, should not lose more than 15% of the mass (dry weight) in the first hour and not more than 20% of the mass over the first 24 hours as dissolved material to the aqueous phase.

Further, under the same conditions, the particle should not lose more than 25% from the cationicity to the aqueous phase in the first hour and not more than 35% over 24 hours.

To produce the cellulose particle defined in this invention, various techniques can be used.

One way is to use a polymer containing cationic groups, or groups that can be post-cationised and to graft this polymer on to the surface layer of a insoluble polysaccharide substrate in an almost dry environment with the aid of a catalyst or initiator at elevated temperature.

Alternatively, reagents of one or more types that are capable of being co-polymerised or cross-linked, at least one of which contains cationic groups or groups that can be post-cationised are impregnated onto a cellulose substrate particle. Under suitable conditions, these substances are polymerised in the presence of the cellulose, so that polymer building and cross-linking form mechanical bonds with the cellulose surface.

The term composite, also used in this description, is intended to have the same meaning. Cellulose, having a porous matrix structure, lends itself to this effect.

Preferably, the initial reaction stage of the manufacturing procedure is conducted under conditions where little or almost no water is present. The presence of too much water, especially free water outside of the body of the cellulose particle to be cationised, interferes with the intimate contact necessary between the substrate and cationising reagent for efficient yield. In this case, not more than 30% water but preferable less than 15% measured as of the total reaction mass should be present during reaction.

The polysaccharide substrate used can be bleached, unsubstituted cellulose pulp such as is used for paper manufacture, or also derivatives of cellulose such as cellulose ethers or esters, where the degree of substitution is low enough so that the cellulose substrate is essentially insoluble in water and that the resultant end product of this invention is an essentially insoluble particle that exhibits a measurable cationic charge. Further, other insoluble polysaccharides such as chitin and its derivatives can be used. Normally, the substrate particle is ground or refined to a fine particle size compatible with the application before it is used in the manufacture of the invented product. However, refining or milling of the finished product is shown to be an acceptable and depending on the application, sometimes necessary, procedure.

A suitable polymer for creating permanently fixed cationic groups onto the polysaccharide substrate is low molecular weight poly diallyl dimethyl ammonium chloride (polyDADMAC) in concentrated aqueous solution. Other suitable polymers would be water soluble, contain cationic groups, or groups that can be post-cationised, and be capable of reacting further by using a free radical initiation catalyst. Mixtures of polymers, including non-cationic ones, can also be used as long as the end product is an essentially insoluble particle that exhibits a measurable excess cationic charge.

A suitable catalyst to initiate the required polymerisation reaction is ammonium peroxydisulphate. Other catalysts which can create free radicals on heating can be used.

These raw materials are reacted together to produce the cationised particles of this invention typically by placing an essentially dry, finely milled insoluble polysaccharide powder, such as refined cellulose, in a vessel with mixing capability such as a tumble-blender or alternatively in a suitably modified ball-mill. An aqueous solution of a free radical initiator catalyst, for instance ammonium peroxydisulphate, is sprayed slowly and evenly onto the cellulose powder. This penetrates into the surface layer of the cellulose particles. Next, a solution of a reactable polymer which contains cationic groups, or groups which can be post-cationised, such as a low molecular weight polyDADMAC is slowly added to the mixing vessel to coat the catalyst-treated cellulose particles. The moist powder must not have too high a water content for the reaction stage or, as the main reaction, the polyDADMAC will have a tendency to polymerise with itself away from the substrate surface whereas with less water present, some of the polyDADMAC polymer chains will react in a way that gives permanent bonding with the surface layer of the cellulose substrate, as is here required.

The catalyst and the cationic polymer can also be premixed together and then applied to the substrate. The air in the vessel is displaced with nitrogen and the temperature raised to at least 65°C, preferably higher, and held at this temperature for a time which could be several hours during which time some mixing would normally be applied, whereby the cationic polymer bonds to the surface layer of the cellulose and the resultant particles remain separated. A higher temperature speeds up the reaction. After the reaction has reached acceptable completion, the product is dried as required and milled if necessary depending on application. A residue of either unbonded or self polymerised cationic polymer, meaning usually that some cationic products are present that are still water soluble, does not normally, depending on application, adversely affect the performance of the product.

The degree of bonding can be measured by suspending the product as a slurry in water, subsequently centrifuging and comparing the analysed cationicity of the supernatent liquid with that of the original dispersed slurry. These analyses are used to determine the length of reaction time needed for any given set of reaction parameters such as, for instance, reaction temperature.

An alternative procedure to make a cationic cellulose particle as required in this invention is to impregnate moist cellulose powder with an amine such as dimethyl amine followed by further impregnation with epichlorohydrin and then reacting these together to form a polyamine-epichlorohydrin condensation polymer which is bonded into the surface layer of the cellulose subtrate.

For the purpose of simplicity in the following passages, the word cellulose is used to cover also insoluble polysaccharides generally.

The invented cationic cellulose particles are applied as a solid material whereby the material of the particles can be swelled with water, up to for instance a moisture content of 80%. It is also possible to dry the particles and to apply them as a dry powder. Alternatively, the particles can be applied in the form of an aqueous suspension, for example at 3% solids, or even as a paste, for example at 20% solids.

The invented cationic cellulose particles give an outstanding product for the fixation of interfering substances, such as anionic trash and fines, that are found in the water circuits of paper machines during the manufacture of paper.

The cationic cellulose particles are typically added during stock preparation or to the thick stock before any subsequent retention additive is added.

The use of cationic cellulose particles (which are from their nature, very compatible with paper making materials) for this purpose does not negatively affect the runnability of the paper machine as can happen with the currently used fixing agents, such as water soluble, highly cationic polymers, which can lead to over-cationisation in the circuit, or bentonite which can cause deposits.

At the same time, the cationic cellulose particles of this invention, through reducing the amount of dissolved, colloidal or finely dispersed anionic substances in the paper machine circuits by binding such interfering substances onto an insoluble substrate, lead to an improvement in the natural retention of such substances, fillers for instance, in the paper sheet. Further, fixation of trash in this way improves the performance of any retention additives, such as polyacrylamides, that are used.

The net result of using the cationic cellulose particles in this way leads also to a reduction in the necessary dosage of conventional retention aid.

A further valuable spin-off of this trash fixation effect is to progressively reduce the contamination in the paper machine white water and back water circuits. This contamination which, especially in machines with more closed circuits as is today the norm, can be both solid, dissolved or colloidal and causes deposits in the machine leading to spots etc. in paper, and a disruption of the chemical and physical conditions required for efficient paper manufacture.

A further specific advantage of using the cationised cellulose particles in this way is that over cationisation of the paper machine circuits, as is possible with water soluble cationic fixation additives, in not normally possible. The cationic particles, if over dosed, will be carried out of the circuit with the paper and do not accumulate in the white water. Over cationisation with soluble fixing additives can lead to a charge reversal and dispersion effect which of course is not required.

A combination of the use of the cationic cellulose particles of this invention, applied in the thick stock during paper making, with a later and separately dosed water soluble polymer retention additive can be refered to a dual-component retention system.

The use of the cationic cellulose particles of this invention as trash fixative and / or retention system component in paper manufacture gives advantages in finished paper characteristics, especially an increase of paper strength, or in filled papers, the possibility to increase the level of filler, thus saving costs, without loss of paper strength as would normally be the case.

A further influence of cationic cellulose particles on finished paper is that the bulk and micro-porosity of the paper for a given weight is increased. This can increase the stiffness of the paper and improve the callandering characteristics if applicable.

Due to the ability of the cationic cellulose particles of this invention, alone or in combination with water soluble polymers, to absorb dissolved or colloidal anionic trash and to flocculate solid material, the said invented product gives outstanding performance in the separation of dissolved, colloidal and solid material from waste water streams. In comparison with current state-of-the-art waste water flocculants, flocculation is improved, the de-watering of sludge is accelerated and the solids content of pressed sludge will be higher than that obtained conventionally without the pressed sludge sticking to the wire sieve or being forced into the wire and blocking it.

The advantages observed in sludge de-watering when using the cationic cellulose particles are seen in separation mechanical and biological sludge both from industrial and municipal treatment systems.

Waste water contaminated with dyes is notoriously difficult to purify but the treatment of , for instance, anionic dye contaminated waste water, with the cationic cellulose particles of this invention, leads to complete removal of the colour from the waste water.

It will be seen that in the treatment of systems where the desire is to separate a solid phase from a liquid system, such as papermaking or flocculation of waste water, the general effect of the cationic cellulose particles of this invention is to absorb unwanted anionic substances that would otherwise, with high probability, remain to a greater extent in the water phase.

These normally difficult to separate substances are well known to lead to unwanted high chemical oxygen demand (COD), particularly in waste water that must be returned to the environment. The absorbtion of such substances onto the insoluble cationic cellulose particles which are then subsequently flocced and sedimented or separated out, lead to a substantial improvement of the COD in such water.

The large amount of paper which is coated for better printability leads to a more specific case on the general theme of neutralisation of anionic trash and also of solid - liquid separation.The wash water from a paper-coating machine often contains latex which is normally anionically charged and is a notorious interfering substance (behaves as anionic trash and can cause deposits - 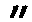 white pitch 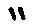 ). If this waste water is re-used in the paper manufacture, which is often the case, or at least the wish, in order to conserve water and pigment for instance, it is normally required that this waste water is coagulated (neutralised) before using as dilution water on a paper machine, or also before disposing as waste water.

Further, the disposal of latex-containing waste water to a waste water treatment plant in irregular quantities, as is normal in practice, leads to great difficulties in controlling the addition of the normally used water soluble coagulants such as highly cationic polymers or soluble salts of polyvalent metals. Over dosing of such treatment aids can lead to cationic dispersion or stabililisation and thus to a situation where the water phase that should be returned to the environment will contain too much contamination.

Use of the cationic cellulose particle of this invention to neutralised and absorb such randomly disposed of waste products does not lead to over cationisation in the aqueous phase during solid - liquid separation as the invented product is essentially insoluble and will be sedimented out.

It is so that quaternary cationic groups can have a strong antimicrobial effect. Many biocides are based on water soluble quaternary cationic compounds and some of these biocides are suitable for and also permitted for the disinfection of surfaces not only in hospitals but also in places where food is prepared. A related hygene problem is that cloths and wipes used to clean surfaces can easily become contaminated by microorganisms which can also multiply in the moist environment of such a cleaning wipe.

A commonly used wipe is constructed from a cellulosic sponge. The cationic cellulose particles of this invention, more especially those where the cationic character is from quaternary ammonium groups, are incorporated into a cellulosic sponge cleaning material to impart a long lasting antimicrobial character to the sponge. The long lasting effect is because the cationic groups are permanently immobilised within the invented product and thus are not washed away in use as would be with a conventional water soluble disinfectant.

A further application of the cellulose particles possessing immobilised antimicrobial characteristics is in absorbant, cellulose based hygene products or in medical dressings where impregnation with soluble or migratable antimicrobial substances could be unwanted for health reasons.

In certain industrial processes, mixtures of solvents will be used where it is advantageous for ecological and economical grounds to recycle the solvent. In one process where cellulose fibres are spun direct from a solvent system otherwise known as Lyocell, the solvent system mainly used, N-methyl morpholine oxide and water, becomes contaminated with unwanted, coloured decomposition substances which can be removed by passing the solvent mixture through an ion exchange filter consisting of the cationic cellulose particles of this invention. The ion exchange system can be regenerated and when no longer effective enough, because it is biologically degradable, can be eventually disposed of in a more environmentally compatible way than other ion exchange resins based on synthetic substrates.

### Example 1 (product/procedure)

### Preparation of cationic cellulose particles

10g of air dry, finely milled cellulose powder is placed in a 250 ml beaker. 3g of a 10% concentration aqueous solution of a free radical initiator catalyst , ammonium peroxydisulphate, is sprayed evenly onto the cellulose powder using a presurised aerosol sprayer. A mixer is used to ensure even distribution of the catalyst. Next, 5g of a cationic polymer, a 40% concentration aqueous solution of a low molecular weight poly diallyl dimethyl ammonium chloride (polyDADMAC) is slowly added to the beaker with continual mixing. The polyDADMAC has a molecular weight average of about 10000. The resultant moist powder has a water content of approximately 33%. The powder is placed in a shallow dish in a warm air drying oven at 45°C for approximately 10 minutes. The measured water content after this drying period is approximately 15%. The mixture is placed in a modified ball mill and before sealing the vessel, the air in the vessel is displaced with nitrogen gas. The closed vessel is placed in an oven where the ball mill can be slowly rotated. The oven is adjusted to a temperature of 80°C. The ball mill is slowly rotated for six hours. The ball mill is removed and allowed to cool. The cationic cellulose powder is removed from the ball mill.

The resultant product, in the form of a moist powder, is stored in this form.

### Example 2 (product/procedure)

The same types and amounts of material, and the same general procedure as used in example 1 are used except that the ammonium peroxydisulphate solution and the polyDADMAC solution are premixed together and added as one to the cellulose powder.

### Example 3 (product/procedure)

The same procedure as in example 2 is used except that a wetting agent, 0.15g of a 20% solution of a surfactant, sodium lauryl sulphate, is premixed into the catalyst/polyDADMAC solution.

### Example 4 (product/procedure)

The same procedure as in example 2 is used except that as cationic polymer, a 40% aqueous solution of a special, highly branched, poly diallyl dimethyl ammonium chloride (a trial product) is used.

### Example 5 (product/procedure)

The same procedure as in example 3 is used except that as cationic polymer, a 40 weight percent aqueous solution of a copolymer of a diallyl dimethyl ammonium chloride and acrylic acid is used. The acrylic acid represents less than 10% of the original monomer components in this copolymer.

### Example 6 (product/procedure)

12g of a finely milled cellulose powder which has a moisture content of approximately 20% is impregnated with 2g of dimethyl amine followed by further impregnation with 2g of epichlorohydrin and then reacting these together in a sealed reactor under a nitrogen gas blanket at elevated temperature to form a polyamine-epichlorohydrin condensation polymer which is bonded into the surface layer of the cellulose subtrate.

### Example 7 (product/procedure)

The same procedure as in example 3 is used except that as the polysaacharide substrate, a finely milled, powdered methyl cellulose is used, which has a degree of substitution such that the methyl cellulose is not readily soluble in water but has only a limited swellability.

### Example 8 (product/procedure)

The products from examples 1 to 7 are individually taken up in approximately 150 ml of warm deionised water, shaken for one minute and filtered out over a micro-fine plastic sieve. This is repeated four more times. The filtrate from the last wash exhibits no significant cationicity in a titration against an anionic titrant, sodium polyethylene sulphonate solution, using a particle charge detector to detect the end-point. After the last wash, the resultant wet cationic cellulose particles are dried in an air circulating oven at 90°C to approximately 10% residual moisture content and stored in this form.

### Example 9 (procedure)

Product as from example 2 is air dried (to approx 10% moisture) and the air-dry product is ground in a BRAUN Model 4045 coffee mill, set to the finest setting, by passing the product through the mill 3 times. The resultant product is stored in this powdered, air-dry state.

### Example 10 (procedure)

Products as in example 8 are ground in a BRAUN Model 4045 coffee mill, set to the finest setting, by passing the products through the mill 3 times. The resultant products are stored in this powdered, air-dry state.

### Example 11 (procedure)

Product prepared as in example 2 and wash treated as in example 8 is milled as an aqueous slurry in a JOKRO-mill. Enough of the original wet product to give 10g as dry cationic cellulose particles is taken and made up to 200g with water. The mixture is transfered to a JOKRO-mill and beaten (ground) for 10 minutes at 1500 rpm. This type of mill is normally used in a paper laboratory to test the beating or refining characteristics of fibres for papermaking.

The level of refining here used is comparable to that which could be used for testing fibres for papermaking.

After measuring the solids content, the resultant refined product slurry is diluted to approximately 3% concentration with water. The resultant aqueous product slurry is stored in this state.

### Example 12 (procedure)

The procedure used in example 11 is also repeated using beating times of 5, 15, 30 and 45 minutes.

The cationicity of the slurry is measured, calculated as cationic charge on the solid product, from the various refined slurries from this example, together with that from example 11. The cationic charge is measured by mixing a known amount of the product with a known excess of standardised 0.001N aqueous sodium polyethylene sulphonate (Na-PES) for one hour, centrifuging the solids out, and then back-titrating a known amount of the clear supernatent liquid against a cationic polymer solution (e.g. Polymin SK - a polyethylene imine) at approx. 1 g/l. A Mütek PCD-02 particle charge detector or alternatively, ortho-toluidine blue can be used to detect the isoelectric end-point.

The values of cationic charge so obtained are tabulated against the JOKRO-mill refining time to show that the cationicity increases marginally after the first grinding but then stabilises. Although the specific surface area of the product is increased, the cationicity remains effectively constant, thus indicating that the cationic charge on the cellulose particle is on the surface.

**Table 1**

| Cationic charge (in micro-equivalents per gram) of slurry in examples 11 and 12, reported as of dry product, after refining in a laboratory JOKRO-mill for various times. | |
|---|---|
| JOKRO-mill refining time minutes | Cationic charge (as of dry product) micro-equivalents/gram |
| 0 | 790 |
| 5 | 800 |
| 10 | 810 |
| 15 | 809 |
| 30 | 802 |
| 45 | 800 |

### Example 13 (procedure)

The stored product from example 9 is added to water to give a solids concentration of 3%. The mixture is stirred at relatively slow speed. The product powder is very easily completely dispersed in the water in a very short time.

### Example 14 (procedure)

The stored, milled product from example 10 produced by milling the product obtained from washing and drying product from example 2 by the procedure in example 8 is added to water to give a solids concentration of 3%. The mixture is stirred at relatively slow speed. The product powder is very easily completely dispersed in the water in a very short time.

### Example 15 (procedure)

The stored product from example 8 is added to a dilute aqueous solution of a water soluble cationic polyacrylamide flocculent such as is used for sludge dewatering (a commercially available product, FLOERGER FO 4190). In this case, the product is added to give an addition level of 5% as air-dry cationised cellulose on the dry weight of cationic polyacrylamide.

The mixture is stirred at relatively slow speed. The product is very easily completely dispersed in the solution in a very short time to give a stable mixture.

### Example 16 (procedure)

The stored product from example 10 produced by milling product from example 2 which has been washed by the procedure in example 8 is added to a dilute aqueous solution of a water soluble cationic polyacrylamide flocculent such as is used for sludge dewatering (a commercially available product, FLOERGER FO 4190). In this case, the product is added to give an addition level of 5% as air-dry cationised cellulose on the dry weight of cationic polyacrylamide.

The mixture is stirred at relatively slow speed. The product is very easily completely dispersed in the solution in a very short time to give a stable dispersion.

### Example 17 (procedure)

The resultant product slurry from example 13 is stirred slowly in a container to maintain the dispersed state of the slurry. The stirring is turned off and after one hour the fine particles of the cationised cellulose are seen to be partially sedimented out.

After several hours, this sedimentation results in a sediment paste at the bottom of the container. The stirrer is once again switched on whereby the fine particles readily redisperse into a homogeneous dispersion.

The mixing, dispersed product slurry, now at approximately 3% solids content, is pumped at a rate of 30 litres/hour in a circuit using a diaphragm dosing pump which has a maximum capacity for pumping water of approximately 80 litres/hour, is fitted with ball valves at the suction and delivery side, and is fitted with pipework of approximately 16 mm internal diameter. After 24 hours of continuous circulation there is no reduction of the pumping efficiency.

Another portion of the mixing, dispersed product slurry, also now at approximately 3% solids content, is pumped in a circuit using a screw-feed or 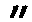 Mohno 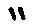 pump, which has a maximum capacity for pumping water of approximately 30 litres/hour and is fitted with a rubber stator designed for aqueous mediums. After 96 hours of continuous circulation at 30 litres/hour there is no reduction of the pumping efficiency, but it is noted that in a pipe of 10 mm internal diameter, the flow rate should be kept above 20 litres/hour to ensure that no sedimentation in the pipe occurs.

### Example 18 (application, dual-system)

### De-watering of biological sludge

The cationic cellulose particles in 3% slurry form from example 13 in combination with the normally used sludge flocculating polymer (a cationic, water soluble polyacrylamide - Allied Colloids, DP7-5636), is used to accelerate the dewatering of biological sludge, and in the same application, to increase the solids content of the resultant de-watered sludge, giving in both stages of the procedure, a result better than that obtained with the normally used flocculent polymer alone.

The sludge treated, from a combined municipal / industrial sewage works, is a mixture of primary and biological sludge and is taken fresh for this application procedure from a point between the sludge thickener (after the anaerobic digester), and before the final de-watering press, and at a point before any flocculent treatment products are added. The total solids of this sludge are approximately 2%.

The standard flocculating polymer is prepared fresh from the supplied powder form as a 0.3% aqueous solution.

This normally used flocculant polymer is a cationic, water soluble polyacrylamide. It is used on the full scale sewage plant being one of a number of suitable products chosen after extensive optimisation trials.

The cationic cellulose particle slurry from example 13 is diluted further to a 0.3% solids, aqueous slurry. This means that any mixture of cationised cellulose slurry and the water soluble polymer solution will always have the same total active solids content.

The following laboratory apparatus is used in the procedure:
1) A Britt-jar dynamic drainage apparatus, fitted for each test with a pre-weighed, 110 mm diameter, type 589-black ribbon, ashless filter-paper. The Britt-Jar standard sieve is not used for this set up. The Britt-jar precision stirrer is not used in the drainage jar, but separately in the pre-mixing beaker.
2) The Britt-jar drainage spout, equipped with an off/on valve, is connected using flexible silicone tubing, to a collection vessel which is placed on an electronic balance. The balance is programmed to send at set time intervals, a signal of the registered weight to a computer, where the weight of filtrate against time are recorded. The collection vessel is also fitted with a flexible connection at the top to a vacuum pump via an adjustable relief valve which is adjusted to give a pre-set vacuum level.
3) A 500 ml Beaker is set up so that its contents can be stirred with a precision stirrer (that which is supplied with the Britt-jar set). The stirrer propeller is modified to a flat bladed paddle that sweeps near the circumference of the beaker.
4) Filter papers - type 589, black ribbon -110 mm, dosing syringes, balance, drying oven, etc.

The following procedure is used:

A range of flocculent solutions are prepared by mixing the 0.3% cationised cellulose slurry with the 0.3% cationic, water-soluble polyacrylamide (PAA) solution to give a series of test flocculents ranging from straight PAA, through various mixtures, to straight cationic cellulose particle slurry. The solids content of all mixtures are the same.

500 ml of fresh untreated sludge (approx. 10g solid content at 2%) is placed in the beaker. The sludge is stirred at 200 rpm. for 1 minute. 15ml of a flocculent test solution is added (approx 0.045g active solids at 0.3%) using a syringe. This simulates the optimised dosage used in practice.

The treated sludge is mixed for a further 2 minutes.

During this time, the vacuum pump is switched on and the vacuum allowed to stabilise to the pre-set level. The valve at the base of the Britt-jar is shut. The filter paper in the Britt-jar is made damp.The collection vessel is empty. The balance is zeroed after the vacuum has stabilised.

130 ml of treated sludge from the mixture in the beaker, after the 2 minute mixing stage, is taken and added to the Britt-jar. The sludge gives a layer approx. 1.5 cm deep. The computer data recording is started and the valve between the Britt-jar and the collecting vessel is opened.

The collected filtrate weight is recorded automatically at various times during the dewatering. When the sludge is fully de-watered, as seen by a cessation of filtrate coming into the collecting vessel and by air being drawn through the sludge-cake, or in the case of poor de-watering, that the filter is blocked by inefficient flocculation allowing no filtrate through, the the test is stopped. The sludge remaining on the filter-paper is tested for solids content.

The filtrate obtained at the end of each test is tested for turbidity and for chemical oxygen demand (COD).

The procedure is repeated for the other flocculant mixtures.

The results of filtrate weight are tabulated against time for each of the flocculent mixtures used.

The results of de-watered sludge solids content are tabulated against each flocculent mixture used, as are the filtrate turbidity and COD.

**Table 2**

| (De-watering speed of sludge) De-watering of biological sludge, with various levels of cationic cellulose particles from example 13, used in combination with polyacrylamide - filtrate weights at various times | | | | | | | | | | |
|---|---|---|---|---|---|---|---|---|---|---|
| | Flocculant system for sludge de-watering tests as percent (dry) of total weight of flocculant | | | | | | | | | |
| % cationic cellulose particles | 0 | 0 | 1 | 2 | 4 | 6 | 8 | 10 | 50 | 100 |
| % cationic polyacrylamide | 0 | 100 | 99 | 98 | 96 | 94 | 92 | 90 | 50 | 0 |

| Drainage time (minutes) | Weight of filtrate from de-watering of sludge (g) | | | | | | | | | |
|---|---|---|---|---|---|---|---|---|---|---|
| 1 | 5 | 31 | 43 | 53 | 53 | 38 | 31 | 24 | 22 | 7 |
| 2 | 5 | 48 | 54 | 61 | 60 | 49 | 44 | 37 | 28 | 8 |
| 3 | 7 | 54 | 61 | 69 | 70 | 53 | 47 | 44 | 31 | 8 |
| 4 | 8 | 58 | 65 | 74 | 76 | 56 | 52 | 46 | 34 | 11 |
| 5 | 10 | 64 | 70 | 78 | 78 | 58 | 53 | 46 | 35 | 13 |
| 6 | 10 | 67 | 74 | 83 | 82 | 62 | 59 | 50 | 39 | 17 |

**Table 3**

| (Solids content of de-watered sludge) De-watering of biological sludge, with various levels of cationic cellulose particles from example 13, used in combination with polyacrylamide - solids content of de-watered sludge | | | | | | | | | | |
|---|---|---|---|---|---|---|---|---|---|---|
| | Flocculant system for sludge de-watering tests as percent (dry) of total weight of flocculant | | | | | | | | | |
| % cationic cellulose particles | 0 | 0 | 1 | 2 | 4 | 6 | 8 | 10 | 50 | 100 |
| % cationic polyacrylamide | 0 | 100 | 99 | 98 | 96 | 94 | 92 | 90 | 50 | 0 |

| | Solids content of de-watered sludge (%) | | | | | | | | | |
|---|---|---|---|---|---|---|---|---|---|---|
| | * | 19.6 | 21.4 | 24.7 | 23.2 | 21.8 | 21.1 | 20.0 | 15.2 | * |
| Note. Result marked "*" indicates that the sludge did not de-water in a reasonable time to a paste but remained semi-liquid due to poor drainage or blocked filter. | | | | | | | | | | |

**Table 4**

| (Turbidity and COD of filtrate) De-watering of biological sludge, with various levels of cationic cellulose particles from exampe 13, used in combination with polyacrylamide - filtrate turbidity and COD | | | | | | | | | | |
|---|---|---|---|---|---|---|---|---|---|---|
| | Flocculant system for sludge de-watering tests as percent (dry) of total weight of flocculant | | | | | | | | | |
| % cationic cellulose particles | 0 | 0 | 1 | 2 | 4 | 6 | 8 | 10 | 50 | 100 |
| % cationic polyacrylamide | 0 | 100 | 99 | 98 | 96 | 94 | 92 | 90 | 50 | 0 |

| | Chemical oxygen demand of filtrate (mg O₂/l) | | | | | | | | | |
|---|---|---|---|---|---|---|---|---|---|---|
| COD mgO₂/l | 1580 | 1080 | 1060 | 970 | 980 | 990 | 1050 | 1050 | 1300 | 1600 |

| | Turbidity of filtrate (FNU) | | | | | | | | | |
|---|---|---|---|---|---|---|---|---|---|---|
| Turbidity FNU | +450 | 405 | 398 | 348 | 355 | 398 | 410 | 421 | +450 | +450 |

The replacement of approximately 2 - 3% of the water soluble cationic polyacrylamide flocculant normally used, with the cationic, insoluble, cellulose particles of example 13, gives a surprising and significant increase in the de-watering speed for this type of sludge, together with a sought after increase in the solids content of the resultant de-watered sludge and a significant improvement (reduction) in the filtrate turbidity and chemical oxygen demand.

### Example 19 (application, dual-system)

### De-watering of primary sludge

Cationic cellulose particles are applied in combination with the normally used sludge flocculating polymer, to accelerate the dewatering of primary sludge, and in the same application, to increase the solids content of the resultant de-watered sludge, giving in both stages of the procedure, a result better than that obtained with the normally used flocculent polymer alone.

The same basic test procedure as in example 18 is used except for the following differences:

The cationic cellulose particles used are those from example 14.

The sludge treated in this example is taken from an industrial, mechanical waste water plant, where normally, the waste water is pre-coagulated, allowed to sediment out, the sediment is concentrated in a sludge-thickener, and then, after treating with a water soluble cationic polyacrylamide, is de-watered and pressed on a wire band press.

The standard, optimised, water soluble cationic polyacrylamide used normally to treat this particular sludge is FLOERGER FO 4190.

The sludge used is taken fresh from the waste water plant for this example from a point between the sludge thickener and before the final de-watering press, and before any flocculent treatment products (for the press) are added. The total solids of this sludge are approximately 2%.

**Table 5**

| (De-watering speed of sludge) De-watering of primary sludge, with various levels of cationic cellulose particles from example 14, used in combination with polyacrylamide - filtrate weights at various times | | | | | | | | | | |
|---|---|---|---|---|---|---|---|---|---|---|
| | Flocculant system for sludge de-watering tests as percent (dry) of total weight of flocculant | | | | | | | | | |
| % cationic cellulose particles | 0 | 0 | 1 | 2 | 4 | 6 | 8 | 10 | 50 | 100 |
| % cationic polyacrylamide | 0 | 100 | 99 | 98 | 96 | 94 | 92 | 90 | 50 | 0 |

| Drainage time (minutes) | Weight of filtrate from de-watering of sludge (g) | | | | | | | | | |
|---|---|---|---|---|---|---|---|---|---|---|
| 0.5 | 8 | 21 | 22 | 28 | 29 | 27 | 24 | 20 | 16 | 10 |
| 1.0 | 12 | 37 | 42 | 45 | 46 | 43 | 38 | 30 | 23 | 15 |
| 1.5 | 14 | 49 | 51 | 58 | 61 | 57 | 50 | 39 | 28 | 17 |
| 2.0 | 15 | 54 | 56 | 63 | 68 | 65 | 58 | 47 | 34 | 21 |
| 2.5 | 18 | 57 | 60 | 67 | 72 | 72 | 63 | 52 | 38 | 23 |
| 3.0 | 20 | 59 | 63 | 74 | 78 | 74 | 68 | 57 | 44 | 24 |

**Table 6**

| (Solids content of de-watered sludge) De-watering of primary sludge, with various levels of cationic cellulose particles from example 14, used in combination with polyacrylamide - solids content of de-watered sludge | | | | | | | | | | |
|---|---|---|---|---|---|---|---|---|---|---|
| | Flocculant system for sludge de-watering tests as percent (dry) from total weight of flocculant | | | | | | | | | |
| % cationic cellulose particles | 0 | 0 | 1 | 2 | 4 | 6 | 8 | 10 | 50 | 100 |
| % cationic polyacrylamide | 0 | 100 | 99 | 98 | 96 | 94 | 92 | 90 | 50 | 0 |

| | Solids content of de-watered sludge (%) | | | | | | | | | |
|---|---|---|---|---|---|---|---|---|---|---|
| | * | 32.1 | 34.0 | 34.6 | 41.9 | 38.4 | 37.1 | 35.7 | 24.2 | 20.6 |
| Note. Result marked "*" indicates that the sludge did not de-water in a reasonable time to a paste but remained semi-liquid due to poor drainage or blocked filter. | | | | | | | | | | |

**Table 7**

| (Turbidity and COD of filtrate) De-watering of primary sludge, with various levels of cationic cellulose particles from example 14, used in combination with polyacrylamide - filtrate turbidity and COD | | | | | | | | | | |
|---|---|---|---|---|---|---|---|---|---|---|
| | Flocculant system for sludge de-watering tests as percent (dry) from total weight of flocculant | | | | | | | | | |
| % cationic cellulose particles | 0 | 0 | 1 | 2 | 4 | 6 | 8 | 10 | 50 | 100 |
| % cationic polyacrylamide | 0 | 100 | 99 | 98 | 96 | 94 | 92 | 90 | 50 | 0 |

| | Chemical oxygen demand of filtrate (mg O₂/l) | | | | | | | | | |
|---|---|---|---|---|---|---|---|---|---|---|
| COD mgO₂/l | 1250 | 890 | 880 | 800 | 720 | 800 | 850 | 860 | 1020 | 10 |

| | Turbidity of filtrate (FNU) | | | | | | | | | |
|---|---|---|---|---|---|---|---|---|---|---|
| Turbidity FNU | +450 | 320 | 300 | 278 | 247 | 270 | 322 | 346 | 420 | 445 |

The replacement of approximately 4% of the water soluble cationic polyacrylamide flocculant normally used, with the cationic, insoluble, cellulose particles from example 14, gives a surprising, significant and useful increase in the de-watering speed for this type of sludge, together with a sought after increase in the solids content of the resultant de-watered sludge and a significant improvement (reduction) in the filtrate turbidity and chemical oxygen demand.

### Example 20 (application, single system)

### Coagulation agent in waste water treatment.

The addition of cationic cellulose particles in waste-water treatment, improves the elimination of anionic, colloidal material from a water sample and improves the sedimentation of the contaminating solids in the water through subsequent use of conventional flocculants.

The cationic cellulose particles from example 14 are used.

Waste water from a paper coating machine is taken fresh. By titration with a Mütek PCD-02 / autotitrator system, the water is shown to have a high anionic charge and by other tests, to have a high turbidity and chemical oxygen demand (COD).

As control tests, the waste water is treated first with the normally used polyaluminium chloride (PAC) coagulent and after a fixed time, with one of two alternatively used water soluble polyacrylamide flocculants, one a cationic type and the other an anionic type. This simulates the treatments used in the waste water plant.

At a level representing 10% of the weight (dry/dry) of the polyacrylamide finally used, an amount of cationic cellulose particles are added first to the waste water, mixed for a fixed time, the normally used amount of PAC is added, followed by a reduced amount of polyacrylamide flocculant, reduced in proportion to the amount of cationic cellulose particles used - 10%.

The treated mixture is allowed to stand in a calibrated measuring cylinder for one hour.

The level of sedimented sludge is recorded. A smaller volume indicates a higher, and advantageous, sludge density. The turbidity and chemical oxygen demand of the supernatent water are measured. As this water would normally be re-used as process water or alternatively returned to a river, low turbidity and COD are an advantage.

**Table 8**

| Application of cationic cellulose particles from example 14 in coagulation and sedimentation of paper coating machine waste water. Analysis of sedimentation in a 100 ml measuring cylinder. | | | |
|---|---|---|---|
| Coagulation/flocculation system used | Volume of visible sediment after 1 hr. ml | Turbidity of supernatent liquid FNU | COD of supernatent liquid mgO₂/l |
| none | 30 (poor separation of sediment) | +450 | 1640 |
| PAC + cationic PAA (1st std. system) | 12 | 44 | 260 |
| PAC + anionic PAA (2nd std. system) | 14 | 36 | 290 |
| cat. cellulose particles, PAC + cationic PAA | 10 | 33 | 220 |
| cat. cellulose particles, PAC + anionic PAA | 10 | 32 | 210 |

Surprisingly, the pre-treatment of the waste water with cationic cellulose particles improves the sedimentation, turbidity and COD over those levels obtained with the standard system and this advantage is seen in a system that uses either cationic PAA or anionic PAA.

### Example 21 (application, dual-system)

### Paper manufacturing

Cationic cellulose particles as a 3% slurry from example 13 are used in a laboratory test rig both as an alternative component and to replace a part of a retention aid system, giving several improvements appliable to the paper making process.

### Retention / fixation

A Britt-jar dynamic drainage tester is used.

### Part 1) Application in wood-free, fine paper stock.

In the first part of this example, a synthetic paper stock is prepared with a mixture of wood-free, beaten, short and long fibres together with ground calcium carbonate filler. The stock is diluted to thin-stock consistency consistency, salts are added to increase the conductivity, and the pH is adjusted to neutral. The stock, when filtered, has an anionic charge due to dissolved or colloidal substances present (anionic trash).

The anionic charge (expressed as cationic demand) is measured by titrating an aliquote of filtered paper stock against a standardized cationic polymer solution (0.001N polyethylene imine) using a Mütek PCD-02 particle charge detector, or a suitable colour indicator such as ortho-toluidine blue, as end-point detector.

A range of dynamic drainage tests are carried out using various retention aid systems and also using retention systems where part of the existing system is replaced by cationised cellulose of a type explained above. In this test procedure, the drainage is conducted with the Britt-jar mixer in operation.

In tests using cationic cellulose particles as part of the retention system, this component is added early in the Britt-jar test procedure, followed by the second component - a water soluble polymer - later in the test, shortly before the start of the de-watering phase.

The filtrate (A) obtained from the Britt-jar test is tested for solids content by filtering through a pre-weighed, ashless filter paper giving an second, solids-free filtrate (B). The resultant filter paper with filtrate residue is ashed to determine the mineral filler content. The filtrate (B) from the second filtration is tested for chemical oxygen demand (COD), for turbidity, and for residual anionic (or cationic) charge expressed as cationic demand. The charge is measured as described for the initial paper stock.

The results of this part of the example are tabulated in table 8

**Table 9**

| Effect of cationic cellulose particles from example 13 combined with water soluble polymer on total retention, filler retention, etc. Britt-jar test - wood-free, fine paper stock, carbonate filler, neutral conditions. | | | | | |
|---|---|---|---|---|---|
| Retention aid system | Britt-jar filtrate | | post-filtered Britt-jar filtrate | | |
| | total solids | filler content | turbidity | COD | cationic demand |
| | g/l | g/l | FNU | mgO₂/l | mg PSK/l |
| no retention aid (blank) | 2.03 | 1.14 | 445 | 1060 | 49 |
| 0.06% cationic polyacrylamide | 1.71 | 1.17 | 294 | 810 | 9.6 |
| 0.03% cationic polyacrylamide + 0.10% bentonite | 1.59 | 1.22 | 432 | 790 | 18 |
| 0.03% cat. cellulose particles+ 0.03% cationic polyacrylamide | 1.41 | 1.08 | 306 | 780 | 8.0 |

### Part 2) Application in a groundwood / de-ink containing stock.

In the second part of this example, a different type of paper stock is used, this time taken as thick stock direct from a paper machine mixing chest. The stock is diluted to about 1% consistency. The stock contains ground-wood pulp, de-inking pulp, and some wood-free fibres together with china clay as filler.

The same Britt-jar procedure and associated testing is conducted on this alternative diluted stock. This time, for the Britt-jar procedure, a water soluble polyethylene imine is used as standard retention aid. As part of the test, the polyethylene imine retention aid (normally used on the paper machine concerned) is also partly replaced with the cationised cellulose particles from example 13.

The results of this part of the example are tabulated in table 10

**Table 10**

| Effect of cationic cellulose particles from example 13 combined with water soluble polymer on total retention, filler retention, etc. Britt-jar test - groundwood/de-inking/wood-free mixed stock, clay filler, pseudo-neutral conditions. | | | | | |
|---|---|---|---|---|---|
| Retention aid system | Britt-jar filtrate | | post-filtered Britt-jar filtrate | | |
| | total solids | filler content | turbidity | COD | cationic demand |
| | g/l | g/l | FNU | mg O₂/l | mg PSK/l |
| no retention aid(blank) | 8.8 | 6.2 | 237 | 345 | 41 |
| 0.06% polyethylene imine | 7.1 | 5.3 | 128 | 242 | 25 |
| 0.03% cat. cellulose particles + 0.03% polyethylene imine | 6.7 | 5.1 | 101 | 230 | 20 |

The replacement of some of the water soluble cationic polymer (either part polyacrylamide - part 1, or polyethylene imine - part 2) flocculant normally used as retention aid, with the cationic, insoluble, cellulose particles gives a significant increase in the retention of solids including filler, together with marked decrease in the soluble or colloidal anionic trash in the secondary filtrate shown in reduced turbidity, chemical oxygen demand and anionic charge. These improvements are of significant interest to the paper manufacturing process.

### De-watering

### Part 3) Application in paper making stock.(wood-free, fine paper)

In a separate series of tests, the Britt-jar is modified with a larger drainage spout allowing the drainage speed to be influenced by the de-watering ability of the stock-additive systems and by the drainage sieve used. During the modified Britt-jar procedure, the filtrate drains to a collection vessel which is placed on an electronic balance. The balance is programmed to send at set time intervals, a signal of the registered weight to a computer, where the weight of filtrate against time are recorded.

The cationic cellulose particles from example 13 are used.

The results of this part of the example are tabulated in table 11. The retention/de-watering system percent addition refers to dry weight on dry paper solids in the stock.

**Table 11**

| De-watering of wood-free, carbonate filled, neutral condition paper stock | | | | |
|---|---|---|---|---|
| Retention/de-watering system | Filtrate volume (ml) at measurement time | | | |
| | 50 ml | 100 ml | 150 ml | 200 ml |
| | De-watering time (seconds) | | | |
| no retention system | 47 | 125 | 235 | 312 |
| 0.06% cationic polyacrylamide (PAA) | 13 | 38 | 87 | 141 |
| 0.03%cat.cellulose+0.03%cat.PA A | 10 | 25 | 58 | 123 |

The replacement of some of the water soluble cationic polymer (polyacrylamide) flocculant normally used, with the cationic, insoluble, cellulose particles from example 13 gives a surprising and significant increase in the de-watering speed for this type of paper stock. This could mean that when applied to a paper machine, the speed and thus the paper production could be increased.

### Example 22 (application-dual system)

### Retention

Cationised cellulose particles from various examples are compared against each with respect to their effect as part replacement of a water soluble polymer retention system in a papermaking application simulation. As control, the water soluble polymer is used alone and also a blank and a non-cationic powdered cellulose as used as substrate for example 2 are included (i.e. not cationic, but of a similar particle size).

Each product from the examples is prepared for use in this example as a slurry of 3% dry solids in water.

The Britt-jar procedure from example 21 (for showing effect on retention etc.), part 1 is used, and for each cationic cellulose particle example product, a standard amount of 0.04% in combination with 0.02% water soluble polyacrylamide as retention-aid system is used (% refers to % dry additive on dry paper stock). The paper stock used is as in part 1, example 21.

### Results

**Table 12**

| Britt-jar - comparison of various cationised cellulose particles. Retention expressed as solids in Britt-jar filtrate | |
|---|---|
| cationised cellulose particles used - example no. | total solids in Britt-jar filtrate g/l |
| none used (blank) | 4.42 |
| cellulose powder (non-cationic) | 4.35 |
| 100% polymer - no cationised cellulose | 3.01 |
| 1 | 2.82 |
| 2 | 2.79 |
| 2 treated as in 8 (washed) | 2.72 |
| 9 (2 milled) | 2.68 |
| 2 treated as in 10 (washed, milled) | 2.55 |
| 3 | 2.86 |
| 4 | 2.92 |
| 5 | 2.88 |
| 6 | 2.94 |
| 7 | 2.79 |
| 7 treated as in 10 (washed, milled) | 2.51 |

All of the cationic cellulose particle products as listed in this example produce a higher total retention value by the Britt-jar test than the polymer when used alone. The non-cationic cellulose powder gave no significant effect.

### Example 23 (application-dual system)

### Paper properties

In this example, it is shown that by replacing part of the conventional retention system in a paper making process, the strength of the paper sheet can be maintained or improved with an increased filler content. An increased filler content normally reduces strength of paper.

Paper sheets are made using a laboratory sheet former. The stock used is basically similar to that used in example 21, part 1, that is a mixture of wood-free short and long fibres with calcium carbonate filler.

The cationic cellulose particles used are that from example 9 and that from example 7 which has been washed (ex. 8) and milled (ex.10). Both products were made up as 3% slurries for use.

A range of paper sheets are made using various retention aid systems and also using a retention system where part of the existing system is replaced by cationic cellulose particles of a type explained above.

**Table 13**

| Properties of paper made on a laboratory sheet former. Wood-free, carbonate filled stock, neutral conditions. | | | | |
|---|---|---|---|---|
| Retention system | Paper grammage g/m² | Filler content % | Porosity to air ml/min | Breaking length km |
| None | 65.1 | 2.2 | 2880 | 5.9 |
| 0.02%cat.PAA +0.15% bentonite | 66.5 | 13.1 | 2710 | 4.4 |
| 0.06% cat.PAA | 67.4 | 13.9 | 2850 | 4.3 |
| 0.04%cat. cellulose (ex.2) +0.02% cat.PAA | 66.7 | 14.7 | 2970 | 4.4 |
| 0.04% cat. cellulose (ex.7) +0.02% cat.PAA | 67.1 | 15.2 | 2940 | 4.3 |

### Example 24 (application-single system)

### Fixing agent for anionic trash - paper making.

The product from example 7, treated as in example 8 and 10 (washed and milled) is used to treat a sample of ground-wood papermaking fibre stock to fix anionic trash.

Ground-wood fibre, taken fresh as an approximately 4% stock (slurry) direct from the incoming fibre stream of a paper machine, contains relatively high levels of anionic trash, for instance, lignin-based, soluble and colloidal substances that interfere with the efficiency of the papermaking process, especially in that the efficiency of the retention system is reduced.

The efficiency of the cationic cellulose particles as a trash catcher (fixing agent) is compared with an inorganic cationic fixing agent, (polyaluminium chloride), and an organic, water-soluble cationic polymer fixing agent (a poly amide-amine).

The effect of over-dosing is demonstrated, as this is known with existing current fixing agents to lead to over-cationisation of the papermachine water circuit, and thus also to a negative effect on for instance, retention efficiency.

An appropriate quantity of the cationic cellulose particles are added to 500 ml of the ground-wood stock, whereby the mixture is then mixed for 5 minutes.

The treated ground-wood stock is subsequently filtered through a 589, black ribbon filter paper in a vacuum filter funnel, and the resultant filtrate is tested for turbidity, chemical oxygen demand (COD) and cationic demand.

The cationic demand, a measure of the remaining anionicity in the filtrate, is measured by titrating the filtrate against standardised 0.001N polyethylene imine solution (made up from BASF, Polymin SK at approx. 1g/l), using an automatic titrator and a Mütek PCD-02 particle charge detector to judge the end-point. For over-cationised filtrate, a standardised anionic polymer solution (0.001N Na PES - sodium polyethylene sulphonate) is used.

From the initial results, the amount of the various fixing agents needed to completely neutralise the anionic charge in the ground-wood stock is calculated, and a further test is made whereby double the amount of fixing agent as needed to neutralise the stock is used. The degree of over-cationisation of the resulting filtrate is measured by titration and is expressed in the table of results as a negative cationic demand.

**Table 14**

| Anionic trash fixation in wood containing paper stock. | | | | |
|---|---|---|---|---|
| Fixing agent | Addition on stock solids % dry/dry | Turbidity in filtrate FNU | COD in filtrate mgO₂/l | cationic demand in filtrate mgPSK/l |
| blank - none | 0% | 268 | 328 | 57.5 |
| | | | | |
| Polyaluminium chloride (PAC) | 0.3% | 220 | 312 | 49.7 |
| PAC - overdosed (2x neutrality) | 3.5% | 262 | 326 | -18.8 |
| | | | | |
| Catiofast SL (organic cat. polymer) | 0.05% | 165 | 302 | 40.2 |
| C. SL - overdosed (2x neutrality) | 0.33% | 191 | 366 | -27.5 |
| | | | | |
| cationic cellulose particles | 0.1% | 175 | 310 | 48.6 |
| cat. cell - overdosed (2x neutrality) | 1.0% | 158 | 264 | 3.0 |

The cationic cellulose particles exhibit a significant ability to fix anionic trash compared with the other state-of-the-art products but has a surprising advantage in that, due to its insoluble nature, it does not lead to over-cationising of the filtrate water when overdosed, such as occurs with water-soluble, cationic fixing agents.

### Example 25 (application)

### Dye absorption

Cationic cellulose particles from example 2 which have been treated as in example 8 and 10 (washed and milled) are used in an ion-exchange capacity to remove an anionic dye, Orange II, from an aqueous solution. A weak solution of Orange II dye at 10mg/l concentration is prepared. A quantity of this solution is diluted x2 with distilled water as a further calibration standard.The colour of these solutions are markedly orange.

10mg of the cationic cellulose particles are added to 20 ml of the Orange II solution, shaken for 1 minute and allowed to settle for 15 minutes.

A similar test is conducted using non-cationic cellulose powder instead of the cationic cellulose particles.

Another similar test is conducted using 5mg of a 40% polyDADMAC solution instead of the cationic cellulose particles. The polyDADMAC here used is a standard grade used for waste water coagulation and flocculation.

After the 15 minutes standing time, the supernatent phase from the tests are centrifuged to remove sedimentable substances.

The absorption at 495 nm wavelength of the resultant liquid phases are tested in a Merck model SQ300 photometer using a 20 mm silica cell.

**Table 15**

| Absorption at 495 nm of aqueous phase after treatment and centrifuging. | | | |
|---|---|---|---|
| Sample | Abs. 495 nm | dye removal % | colour |
| blank, distilled water | 0.002 | - | water white |
| control 1 (5 ppm Orange II) | 0.391 | 0 | light orange |
| control 2 (10 ppm Orange II) | 0.787 | 0 | orange |
| control 2, cellulose powder treated | 0.780 | 1 | orange |
| control 2, cationic cellulose particle treated | 0.046 | 95 | water white |

The ability of the cationic cellulose particles to remove Orange II from water in this way is obviously also applicable to other anionic dissolved contaminants.

### Example 26 (application)

### Long-term antimicrobial character

Cationic cellulose particles from example 2 are incorporated into a cellulose material, in this case paper, to impart long-term, washable anti-bacterial behaviour. Paper sheets are formed on a standard laboratory sheet former using a paper stock consisting of bleached cellulose fibres containing 10% by dry weight of the cationic cellulose particles.

The resultant paper is dried at 105°C to air dryness, approximately 6% moisture. Control quality paper sheets are made using only bleached cellulose fibre, i.e. no cationic cellulose particles.

A further control test paper is prepared by treating this paper sample made only from bleached cellulose with a 300 ppm active solution of a quaternary ammonium chloride biocide. This biocide is a type that can be used to disinfect kitchen surfaces for instance.

One portion of the test papers are repeatedly washed with hot water at 60°C in a Buchner funnel to simulate repeated use and rinsing of a kitchen wipe.

Both washed and unwashed test papers are dried in preparation for the next stage.

Water from household dish washing is collected and used to moisten the paper samples almost to saturation point which are then placed in covered Petri dishes that are filled with a layer of agar gel containing a stain that indicates microbial growth. The dishes containing the treated paper specimens are placed in an incubator at 25°C.

At sucessive time intervals, the tests dishes are controlled for microbiological growth by observing colony growth.

The following samples show a dramatically lower microbiological growth than all the other test samples, including that treated with biocide but subsequently washed in hot water, which show a high level of microbiological contamination:
- paper containing biocide, but not washed in hot water.
- paper containing cationised cellulose particles, but not washed in hot water.
- paper containing cationised cellulose particles which has been also washed in hot water.

In practice, such as in a frequently used kitchen wipe, a microbiologically inactive wipe could develop enough pathological microorganisms to present a health hazard. From the test using paper to simulate a kitchen wipe, it is seen that addition of cationic cellulose particles imparts a long lasting, washable anti-microbial character to the material.

### Example 27 (application)

### De-contamination of solvent

Cationic particles are used in an ion-exchange capacity to remove unwanted anionic contaminants such as coloured decomposition products from amine oxide solvents used in Lyocell cellulose fibre spinning processes to enable such solvents to be re-cycled.

## Claims

1. Cellulose particles that possess cationic groups characterised in that the particles are essentially insoluble in water and that the cationic groups are present on the surface.

2. Cellulose particles as in claim 1 characterised in that at least 10%, preferably at least 50%, of the cationic groups are immobilised onto the surface of the cellulose particles.

3. Cellulose particles as in claims 1 and 2 characterised in that the cationic groups are present in a polymer which is covalently bonded to the surface of a cellulose particle.

4. Cellulose particles as in claim 1 and 2 characterised in that the cationic groups are present on a polymer which is attached to the porous surface of the cellulose particles by means of a mechanical bond.

5. Cellulose particles as in one of the previous claims characterised in that at least one polymeric group itself containing at least two cationic groups is present for every 100 anhydroglucose units of the cellulose.

6. Cellulose particles as in one of the previous claims characterised in that they have an average particle size of between 0.001 and 10mm, preferably 0.01 to 1mm.

7. Cellulose particles as in one of the previous claims characterised in that the cellulose particles are present in combination with a water soluble polymer.

8. Cellulose particles as in one of the previous claims characterised in that the cellulose particles are present in combination with a water soluble cationic polymer.

9. Cellulose particles as in one of the previous claims characterised in that the cellulose particles are present in combination with a water soluble polyacrylamide.

10. Process for manufacture of the cellulose particles as in one of the previous claims characterised in that a particulate cellulose substrate is surface impregnated with a substance or mixture of substances containing cationic groups or groups that can be post-cationised, followed by a reaction stage to immobilise the impregnation substances onto the particle.

11. Process for manufacture of the cellulose particles as in one of the previous claims characterised in that as cellulose particle substrate material, unsubstituted cellulose, cellulose ester or ether, carboxymethyl cellulose, hydroxyethyl cellulose, cellulose sulphate or acetate, chitin or alkali cellulose are used, a prerequisite is that the cellulose substrate particle is essentially insoluble in water.

12. Process for manufacture of the cellulose particles as in one of the previous claims characterised in that in an essentially water and solvent free system, low molecular weight poly diallyl dimethyl ammonium chloride is impregnated and reacted onto the surface of the cellulose substrate particle using a free radical initiator catalyst at elevated temperature.

13. Process as in claim 12 in that instead of poly diallyl dimethyl ammonium chloride, a low molecular weight highly branched poly diallyl dimethyl ammonium chloride, a copolymer of poly diallyl dimethyl ammonium chloride and acrylic acid is used.

14. Process as in claim 12 in that instead of poly diallyl dimethyl ammonium chloride, any low molecular weight polymer that contains cationic groups or groups that can be post-cationised and that has at least one group per polymer molecule capable of further reacting using a free radical initiator is used.

15. Process for manufacture of the cellulose particles as in one of the claims 1 to 11 characterised in that in an essentially water and solvent free system, an alkylamine or mixtures thereof followed by epichlorohydrin are impregnated onto the surface of the cellulose substrate particle and subsequently reacted together to produce surface bonded cationic polymer groups.

16. Process for manufacture of the cellulose particles as in one of the claims 1 to 15 characterised in that the product is dried to air dryness.

17. Process for manufacture of the cellulose particles as in one of the claims 1 to 16 characterised in that the product is washed with water to remove soluble cationic material.

18. Process for manufacture of the cellulose particles as in one of the claims 1 to 17 characterised in that the product is dried to air dryness and milled to give a uniform and even smaller particle size.

19. Application of the cellulose particles as in one of the claims 1 to 9 in the manufacture of paper and board.

20. Application of the cellulose particles as in claim 19 as additive for fixation of interfering substances which are present in the paper machine circuits by the manufacture of paper.

21. Application of the cellulose particles as in claim 19 as additive for retention of fines and fillers which are present in the paper machine circuits by the manufacture of paper.

22. Application of the cellulose particles as in claim 19 as additive to increase the de-watering speed during formation and pressing in the manufacture of paper.

23. Application of the cellulose particles as in claim 19 as additive to increase the strength of paper in the manufacture of paper.

24. Application as in one of the claims 20 to 23 in that 0.05 to 10kg of cellulose particles (air dry weight) per tonne paper stock (air dry weight) are used.

25. Application of the cellulose particles as in one of the claims 1 to 9 as a flocculant.

26. Application of the cellulose particles as in claim 25 as flocculant in the treatment of waste water.

27. Application of the cellulose particles as in one of the claims 1 to 9 characterised in that the cellulose particles are used in combination with, but added separately to, a water soluble polymer.

28. Application of the cellulose particles as in one of the claims 1 to 9 characterised in that the cellulose particles are used in combination by premixing together with a water soluble polymer.

29. Application of the cellulose particles as in claim 27 characterised in that the cellulose particles are used in combination with a water soluble anionic polymer.

30. Application of the cellulose particles as in one of the claims 27 or 28 characterised in that the cellulose particles are used in combination with a water soluble cationic polymer.

31. Application of the cellulose particles as in one of the claims 27, 28 or 30 characterised in that the water soluble polymer is a conventional or modified polyethylene imine.

32. Application of the cellulose particles as in one of the claims 27 to 30 characterised in that the water soluble polymer is a polyacrylamide.

33. Application of the cellulose particles as in one of the claims 27 to 30 characterised in that the cellulose particles are used in sludge de-watering in combination with a water soluble polymer in an amount from 0.5 to 25% of cellulose particles (air dry weight), more especially 1 to 10%, based on the weight (dry) of water soluble polymer used.

34. Application of the cellulose particles as in one of the claims 27 to 30 characterised in that the cellulose particles are used in the manufacture of paper in combination with a water soluble polymer in an amount from 10 to 90% of cellulose particles (air dry weight), more especially 20 to 60%, based on the weight (dry) of water soluble polymer used.

35. Application of the cellulose particles as in one of the previous claims characterised in that the particles are present in the form of fibres.

36. Application of the cellulose particles as in one of the previous claims characterised in that the particles are able to absorb anionic dyes.

37. Application of the cellulose particles as in one of the previous claims characterised in that the particles are able to impart long lasting, washable, antimicrobial character to absorbant cellulosic material.

38. Application of the cellulose particles as in one of the previous claims characterised in that the particles are able to function in an ion exchange capability by removing coloured contaminants from solvent systems.
